# EUROPEAN PATENT APPLICATION

(11) **EP 2 241 691 A2**
(43) Date of publication of application: **20.10.2010**
(21) Application number: 10472001.6
(22) Date of filing: 16.04.2010
(51) Int. Cl.: E04B 1/14, E04B 2/92, E04C 2/24, E04C 2/52, F24J 2/04

(54) **Fasade thermal wall and a method for its construction**

(30) Priority: 16.04.2009 BG 11036909
(71) Applicant: Radushev, Radoslav Yankov, 9010 Varna (BG); Radushev, Yavor Radoslavov, 9010 Varna (BG)
(72) Inventor: Radushev, Radoslav Yankov, 9010 Varna (BG); Radushev, Yavor Radoslavov, 9010 Varna (BG)

(57) **Abstract**

The facade thermal wall shall be applied in the construction of buildings with very high level of energy efficiency, whereas the structure according to the invention consists of external part (1) and internal part (2). The external part consists of facing components (5) and galvanized sheet iron profiles (12), whereas these are interconnected in a layer of expanded solid polyurethane (9). Together with the facing components, or instead of them, photovoltaic system panels or solar collectors (22) can be used. The internal part (2) consists of a supporting structure of steel profiles (10), (11), delimiting galvanized sheet iron profiles (6), mineral wool panels (18), expanded layer of solid polyurethane (9) and fastened with suspension bolts one or two layers of gypsum fiber board panels (13) with integrated coil pipes (8), which are part of the internal heat distribution system.

The proposed method according to the invention consists of parallel and independent construction of both parts of the thermal wall (1) and (2), with the consequent interconnection via expanding of a layer of solid polyurethane (3).

## Description

### TECHNICAL FIELD

The invention relates to a facade thermal wall and the method for its construction, and it shall be applied in the field of construction works, more specifically the construction of low-energy and passive houses and facades of buildings.

### BACKGROUND ART

Various solutions relate to the construction of facades. Some of them are:
- traditional method to construct the facade with bricks, blocks, etc., plastered from the inside and outside with lime and cement mortar,
- concrete walls, where concrete is poured into pre-fabricated shuttering on site,
- reinforced concrete panels - walls, respectively parts of walls, pre-fabricated and used for the construction of buildings (mainly residential buildings), whereas the structural strength of the building is achieved via the separate panels setting it up.
- monolithic wooden structure panels, lining and insulation materials for the construction of precast buildings, houses, pavilions, etc.
- constructing the facade from separate sandwich panels, assembled to pre-fabricated supporting structure of the building.

The drawbacks of the known solutions are:
- insufficient heat-, noise- and vapor-insulation properties and existence of thermal bridges,
- low level of preparedness of the wall in plant conditions, resulting in bad quality,
- long duration of the manufacturing process
- unsuitable for the construction of low-energy and passive buildings.

### DISCLOSURE OF THE INVENTION

The goal of the invention is to create a facade thermal wall, multifunctional, self-supporting, to a large extent pre-fabricated, combining in an optimal way the contemporary requirements for heat-, noise- and vapor-insulation, contributing to a large extent for the passive heating and cooling of the building.

This goal is achieved through the facade thermal wall presented in the invention, consisting of an external and an internal part. The external part includes facing materials (ceramics, stone, Granitogres, plaster, etc.), located in one plane, where instead of the facing, or parts of it, panels of a photovoltaic system or solar collectors can be integrated, establishing the external energy distribution system of the building. The installed light-weight galvanized sheet iron profiles and injection molded solid polyurethane provide for its strength and solidity with no thermal bridges. The external part can also integrate windows, doors, etc. The internal part of the wall is made of light-weight galvanized sheet iron profiles and a layer of solid mineral wool, which provide for heat-, noise-, and vapor insulation and establish the basis for the installation of an internal facing consisting of one or two layers of gypsum plasterboard or gypsum fiber board with integrated coil pipe from the internal heat distribution system. The steel supporting profiles, providing the structural strength of the building, are integrated into the internal half of the wall. The internal part of the wall integrates components of the power supply system and components of the water supply and sewerage system. All components on the internal part are interconnected by a layer of polyurethane, which provides for the solidness of the structure and additional heat insulation. The external part, shaping the facade, and the internal part, shaping the interior, are bound together by a layer of solid polyurethane with no thermal bridges.

To achieve the goal of the invention, a method for the construction of a facade thermal wall has also been elaborated, where the complete manufacturing process is performed in the environment of a production facility. Facing components (ceramics, stone, Granitogres, priming coat of plaster, etc.) are placed horizontally in special matrices with the front part downwards, which provides for the desired leveling and architectural form. Light-weight profiles are placed on the back side of the facing components, which establish the front part of the wall and provide for the requisite strength, as well as the necessary parts providing for the installation of doors, windows and components of the electricity distribution system. Solid polyurethane is sprayed onto the installed components, connecting the separate parts into a whole. The internal part of the wall is constructed in another workplace, installing light-weight galvanized sheet iron profiles, necessary to shape the back plane of the wall and the solid mineral wool screens are placed between them. The supporting structure of the wall, made of pro-fabricated steel profiles, is placed onto the already shaped plane of mineral wool and light-weight profiles, which is at the same time part of the structure of the building, providing for its mechanical strength. Solid polyurethane is expanded to connect the separate parts together. The internal part of the wall constructed in this manner is rotated to 180° and it is installed in relation to the external part of the wall, distanced with the requisite thickness, whereas a layer of light-weight mineral wool is placed between the two parts, and solid polyurethane layer is expanded on all sides and in the middle, connecting both parts together. In this position, one or two layers of gypsum plasterboard or gypsum fiber board panels are installed to the back side, with integrated coil pipes from the internal heat distribution system, as well as components of the power system and the water supply and sewerage system. The walls that include windows, doors or other components from other systems are integrated during the process of shaping the wall. The completed wall is prepared for transportation to the location where it will be installed. The installation of facade thermal walls is performed by placing them to the foundation prepared in advance and to the installed columns of the supporting structure of the house and welding or anchoring them via fasteners to the columns and to the floor. The outlets of the external power distribution system and the internal heat distribution system of the wall are connected to the respective systems of the building. The installation components closing the joints are installed and sealed with polyurethane.

The advantages of the facade thermal wall and the method of its construction, according to the invention, consist of the following:
- the weight of the facade wall compared to the conventional walls is 10 times lower, whereas its static and dynamic strength and resistance are improved,
- guaranteed higher quality when completed in a production facility environment more than 90%,
- exceptional heat insulation U< 0,15 [W/m²K] for wall thickness of 20-28 [cm],
- very good noise insulation Rw,r > 52 dB,
- vapor insulation µ > 50000,
- fire protection F90-A,
- the efficient area is increased with 6 to 10%,
- the process of manufacturing and constructing the building is significantly accelerated (e.g. a one-storey house of 150 m2 can be manufactured and constructed for about 1 month),
- energy consumption for heating and cooling is decreased more than 10 times, whereas most of the time during the year this is performed in a passive way, i.e. with no production of heat or cold, but by staged utilization of the accumulated day and night energy, which results in a significant decrease (more than 90%) of the fixed costs,
- investment costs decrease, as well as a decrease of the primary energy for the manufacturing of details, transportation and installation on site with more than 30 %,
- significant reduction of the pollution of the environment through considerable decrease of CO2 emissions,

### BRIEF DESCRIPTION OF THE DRAWINGS

Fig. 1. shows a top view of the facade thermal wall
Fig. 2. shows an A-A section, vertical section of the wall as of fig. 1
Fig. 3. shows a front view of the frame construction of the external part
Fig. 4 shows a front view of the frame construction of the internal part
Fig. 5. shows a front view of the support structure of the wall
Fig. 6. shows a B-B section, representing the vertical section of the supporting structure of the wall as of fig. 5
Fig. 7. shows the assembly of the wall to the column and floor

### PREFERRED EMBODIMENT OF THE INVENTION

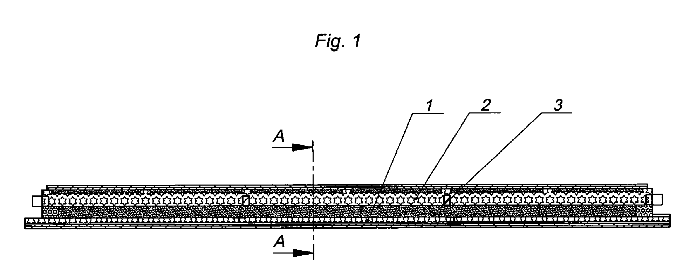

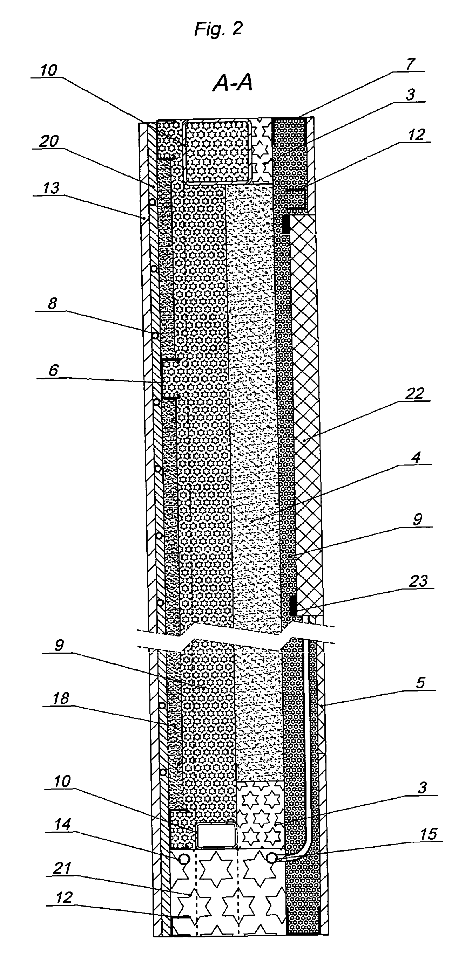

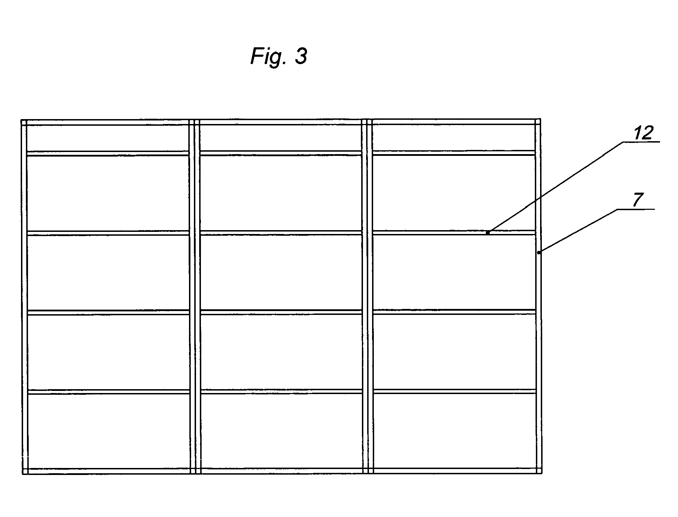

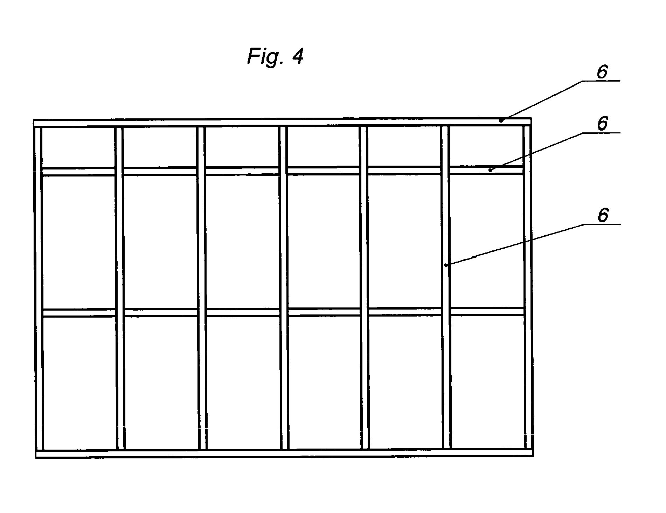

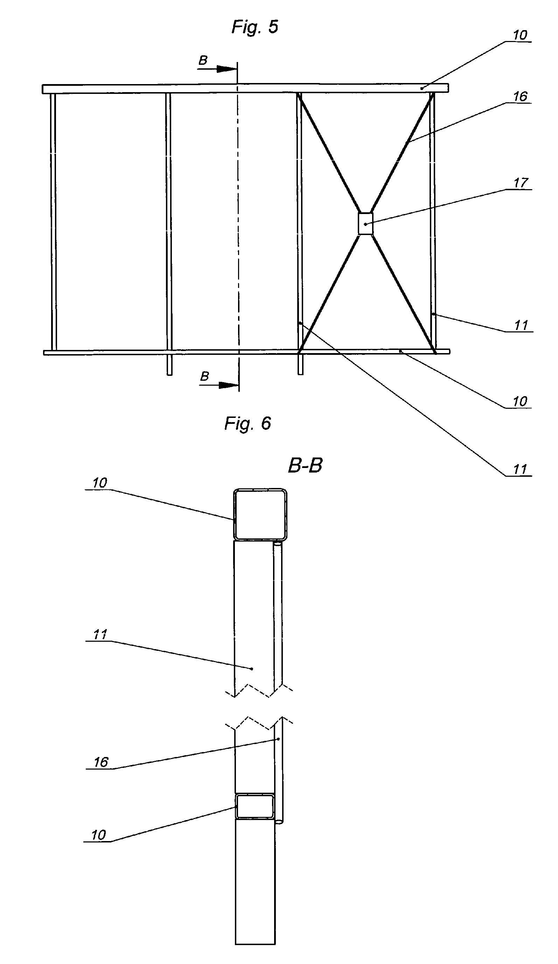

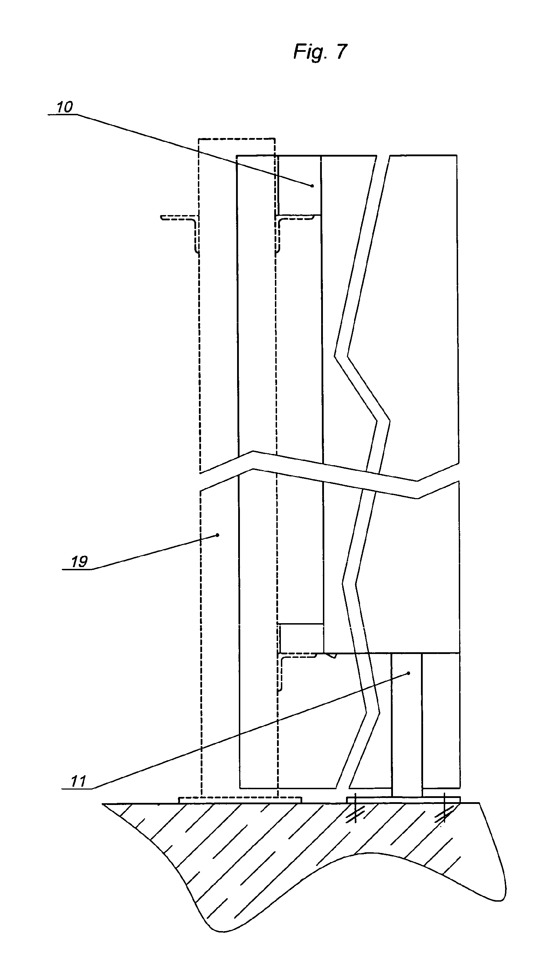

One preferred embodiment of the facade thermal wall, according to the invention, is shown on fig. 1 to 7. The facade thermal wall consists of facing components (ceramic tiles, Granitogres, stone, plaster, etc.) located in one plane, establishing the facade of the building. Instead of facing components, installation straps (23) can be integrated to anchor panels of photovoltaic system or solar collectors. The external half of the wall is limited by light-weight galvanized sheet iron profiles (7) and (12), which provide for the necessary strength, whereas components (5), (12) and (23) are interconnected via the expanded solid polyurethane (9). While the external half of the thermal wall (1) mainly shapes the building and provides heat- and hydro-insulation of the building, the internal part (2), besides these functions, basically has to provide the necessary strength and carrying capacity of the wall through the integrated metal structure, consisting of a profile (10), vertical profiles (11), wind-resisting connections (16) with a connecting strap (17). Furthermore, the internal half (2) houses the light-weight galvanized sheet iron profiles (6) and mineral wool panels (18), whereas the latter can be covered with aluminum foil to provide for the necessary vapor insulation. All components of the back half (6), (10), (11), (17) and (18) are joined together via expanded solid polyurethane (9). The external half (1) and the internal half (2) are separated from one another at a distance defining the wall's thickness, whereas a layer of mineral wool (4) is placed between them, and the joining together of both halves is made via an expanded layer of solid polyurethane (3). To the back portion of the wall, gypsum plasterboard (20) or gypsum fiber board (13) panels are installed by suspension bolts with a coil pipe (8) integrated in advance, representing part of the internal heat distribution system. While the layer of mineral wool covered with aluminum foil (18) is mainly operating as vapor- and fire-protection, the subsequent layers of solid polyurethane (9) and mineral wool (4) aim at achieving noise-insulation and increasing the heat-insulation of the building as a whole. With the integrated panels of a photovoltaic system or solar collectors (22) in the external half of the wall (1), it is possible to gain and distribute electric or heat energy from the sun. The coil pipes of the internal heat distribution system (8) are used for heating, respectively, cooling the premises of the building. The method established in conformity with the invention consists of transferring the complete process of manufacturing the facade thermal wall into a manufacturing facility environment. The facing components (5) and panel fastening components (23) are placed horizontally in a matrix for the production of the external part (1). Thus, the leveling and precise performance of the facade are both guaranteed. After that, the construction of light-weight sheet iron profiles (12) is placed, and then the components placed so far are joined together via the expansion of solid polyurethane (9). The internal half of the wall (2) is constructed at another workplace with a shape corresponding to the front part (1). After the positioning of light-weight galvanized sheet iron profiles (6) in a way to provide a basis for the installation of the external facing, the mineral wool (18) is placed with the foil facing downwards. The pre-fabricated framework structure of black steel profiles (10) and (11) and wind-resisting connections (16) is placed on the layer of mineral wool (18), placed between the light-weight profiles (6). Solid polyurethane (9) is expanded to connect the components of the back half together. The back half (2) is rotated to 180 degrees and it is positioned relative to the external half of the wall (1), whereas light-weight mineral wool (4) is placed between both halves. Solid polyurethane (3) is expanded along the sides and in the grooves provided in the middle of the wall, which interconnects both halves (1) and (2) of the wall with no thermal bridges. Gypsum fiber board panels (13) are fastened via suspension bolts with pre-installed coil pipes (8) between them, representing part of the heat distribution system. The facade thermal wall fabricated in this manner is prepared for transportation and installation on site. The connection of the outlet and inlet points of the internal and external power distribution systems with the systems of the building is performed in the connection points (14) and (15). The installation of the wall to a column (19) is performed via connection straps, and to the floor - via fasteners. The polyurethane fittings (21) and gypsum plasterboard strips (20) are installed after completing the installation of the wall.

## Claims

1. Facade thermal wall, **characterised in that** it consists of external part (1) and internal part (2), whereas the external part (1) consists of facing components (5), located in a single plane, and their back part is limited by light-weight galvanized sheet iron profiles (7) and (12), whereas the components (5),(7) and (12) are interconnected via a layer of solid polyurethane (9), and the internal part (2) includes hollow profile (10), vertical supporting profiles (11), delimiting light-weight galvanized sheet iron profiles (6), mineral wool panels (18), expanded layer of solid polyurethane (9), gypsum fiber board (13) or gypsum plasterboard panels (20), fastened with suspension bolts, with integrated coil pipe (8), whereas the external part (1) and the internal part (20) are interconnected via an expanded layer of solid polyurethane (3).

2. Facade thermal wall according to claim 1, **characterised in that** the facing components (5) consist of ceramics, stone or Granitogres.

3. Facade thermal wall according to claim 1, **characterised in that** the facing components (5) consist of photovoltaic system panels or solar collectors.

4. Method for the construction of a facade thermal wall according to claim 1, **characterised in that** both parts of the wall are constructed in parallel and independently, whereas the construction of the external part (1) consists of laying the facing components (5) horizontally, with the front part downwards in a matrix prepared for this, and then a framework structure of light-weight galvanized sheet iron profiles (12) is laid, and these components are interconnected via expansion of solid polyurethane (9), and the construction of the internal part (2) is made in a separate workplace by first placing delimiting galvanized sheet iron profiles (6) and mineral wool sheets (18) between them, a pre-fabricated structure of black steel profiles (10) and (11), wind-resisting connections (16) and connecting strap (17) is positioned, and after that, via expanded solid polyurethane (9), the components of the internal part (2) are interconnected. Then this is rotated and positioned to the external part of the wall (1), in the middle of which light-weight mineral wool (4) is placed, and then solid polyurethane (3) is expanded along the sides and in the grooves in the middle of the wall, and one or two layers of gypsum fiber board (13) with pre-installed coil pipes (8) in them from the internal heat distribution system are fastened via suspension bolts to the internal part of the wall (2), and the facade thermal wall is prepared for transportation and installation on site.
